# EUROPEAN PATENT SPECIFICATION

(11) **EP 1 792 783 B1**
(45) Date of publication and mention of the grant of the patent: **21.01.2009**
(21) Application number: 06124655.9
(22) Date of filing: 23.11.2006
(51) Int. Cl.: B60R 11/02, F16M 11/12

(54) **Display screen mounting.**
Anzeigebildschirmbefestigung
Dispositif de fixation dýécran dýaffichage

(30) Priority: 30.11.2005 GB 0524326
(43) Date of publication of application: 06.06.2007
(73) Proprietor: CNH U.K. LIMITED, Basildon, Essex S14 3AD (GB)
(72) Inventor: Richardson, Mike, Upminster, Essex RM14 3EX (GB)
(74) Representative: CNH IP Department

(56) References cited:
- JP-A- 5 040 309
- JP-A- 8 223 512
- US-A- 6 129 321
- US-A1- 2004 079 858

## Description

The present invention relates to the mounting of a display screen in the cab of an agricultural vehicle.

Modern agricultural vehicles such as tractors, combine and forage harvesters, rely extensively on sophisticated computerised control systems which require a display to be mounted in the cab of the vehicle. The mounting of the display needs to allow the screen to be oriented to suit the operator.

US2004/0118987 discloses an apparatus for mounting a flat panel display screen which essentially comprises a hinge to allow the inclination (or angle of elevation) of the screen to be adjusted but does not allow rotation of the screen about a vertical axis to point the screen in different directions. In this mounting, the stiffness of the hinge is relied upon to hold the screen steady, which may not always prove satisfactory.

US 6,129,321 discloses a complex mount formed of several parts which allow the screen inclination and azimuth to be adjusted independently of one another using separate controls for the different settings.

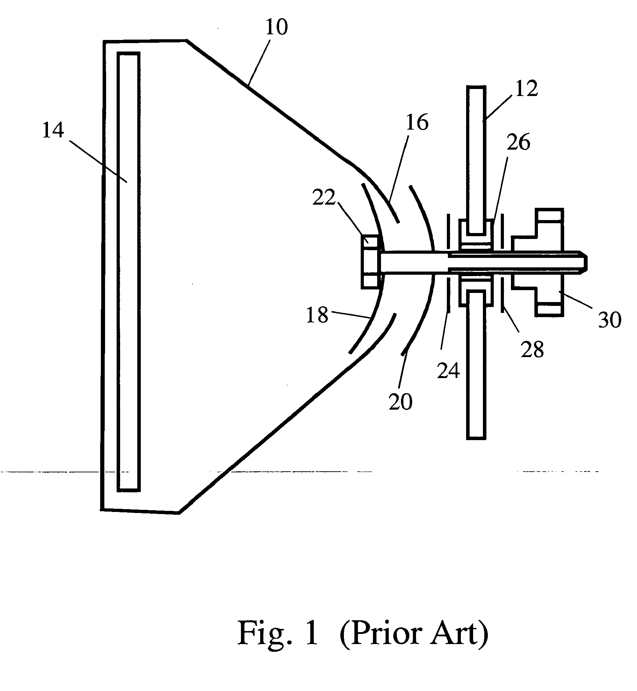

The most relevant prior art to the present invention is believed to be the mounting shown in schematic section in Figure 1 of the accompanying drawings. The display housing 10 is mounted on a mounting bracket 12 that is secured to the control panel of the vehicle. The housing 10, which contains the display screen 14 has a rounded rear end which is sandwiched between a dished moulding 18 and a dished clamping washer 20. A threaded bolt 22, which has its head held captive in the moulding 18, passes with clearance through a hole in the rear end 16 of the housing 10. The bolt 22 then passes in sequence through the dished washer 20, a flat metal washer 24, a metal lined rubber bushing 26 mounted in a hole in the bracket 12, and a further flat metal washer 28 before being engaged by a screw threaded clamp nut 30 that can be turned manually.

The clearance between the bolt 22 and the hole in the rear end 16 of the housing 10 allows the screen to be oriented at will in azimuth and elevation and it can be locked in any desired position by turning the clamp nut 30.

Such a design of the mounting of the display presents certain disadvantages on account of the fact that the clamp nut 30 must be positioned in a manner accessible to the operator. This makes it necessary to space the bracket from the mounting panel to leave space for the clamp nut to be turned manually. This requirement affects the styling of the control panel and places limitation on where the display unit can be positioned. Often, the display needs to be mounted on a tall stalk which makes the display prone to vibration and can cause metal fatigue in its support bracket 12.

The present invention seeks therefore to provide a display screen having a mounting that allows the orientation of the screen to be adjusted simply, that reduces vibration of the screen and does not impose limitations on where the screen can be positioned in the cab of the agricultural vehicle.

According to the present invention, there is provided a display screen having a housing and a base, the housing having a part spherical support surface mating with a socket of complementary shape in the base to allow the screen orientation to be adjusted, and locking means for locking the housing relative to the base in any selected orientation of the screen position, wherein the locking means comprise an elongate member passing through the housing and extending from the base to the opposite side of the housing and a manually operable clamping member engaging the elongate member on said opposite side of the housing.

Preferably, the elongate member passes through the centre of curvature of the part spherical support surface.

While the clamping member may be a clamp nut, it is preferred to use a quick release mechanism comprising a lever connected to rotate an eccentric or a cam rotatably mounted on the end of the elongate member.

The end of the locking member passing through the base preferably passes through an elongate slot in the base.

The elongate member may conveniently be a bolt having a head or a nut engaged in a channel on the underside of the base, which channel serves to prevent the nut or the bolt from turning.

The invention will now be described further, by way of example, with reference to the accompanying drawings, in which :
Figure 1 is, as earlier described, a schematic section through a known display screen and its mounting;
Figure 2 is a section similar to that of Figure 1 showing a display screen of the invention; and
Figure 3 shows the embodiment invention illustrated in Figure 2 in a different orientation of the display screen.

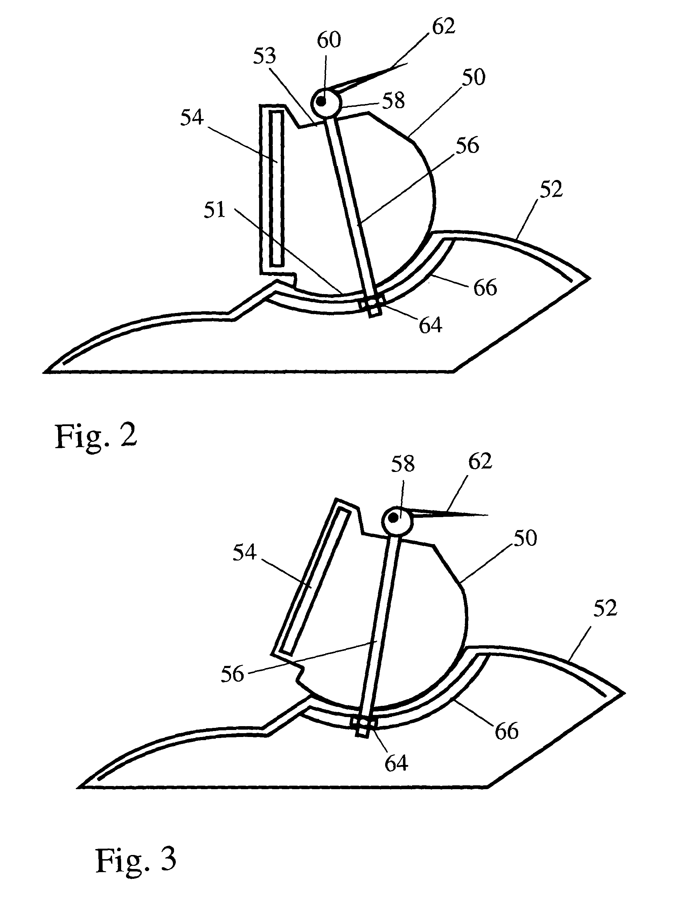

In Figure 2, a display screen 54 is mounted in a housing 50 having a part spherical lower surface 51 which rests in a part spherical socket in a base 52. The base 52 has an elongate slot (lying in the plane of the drawing) with a channel 66 beneath the slot. An elongate member in the form of a bolt 56 passes through the centre of curvature of the surface 51 and extends from the top side 53 of the housing, through the part spherical support surface 51 and into the slot in the base 52. As such, the bolt 56 passes completely through the housing 50 from top to bottom. Since the inner space of the housing 50 is fully loaded with electronic components connected to the display screen 54, it follows that all these components are circumferentially arranged around the bolt 56. The bolt 56 may be housed in a cylindrical tube (not shown) extending from top to bottom of the housing 50, preventing any physical contact between the bolt 56 and the electronic components of the display screen.

A nut 64 screw threaded onto the lower end of the bolt 56 is prevented from turning by the sides of the channel 66.

The opposite end of the bolt 56 carries a quick release mechanism consisting of a cam 58 pivotable relative to the bolt 56 about a pin 60 by means of a lever 62.

As the bolt 56 is engaged in a slot in the base, it can pivot only within the plane of the Figures 2 and 3 about the centre of curvature of the surface 51. In any position of the bolt 56, the housing 50 can be rotated about the axis of the bolt 56 thereby allowing the screen to be oriented about mutually orthogonal axes.

Once the desired position of the screen has been set, it can be locked in place by operating the lever 62 of the quick release mechanism. The bolt 56 can be screwed into the nut 64 to preset the length of the bolt, thereby ensuring that the eccentricity of the cam 58 is sufficient to allow the housing to be fully released or fully locked as the quick release lever 62 is moved from one end position to the other.

Because the locking of the housing in any position is effected from an easily accessed surface of the housing (instead of from the underside of the base), the repositioning of the screen can be performed simply and quickly.

Furthermore, the housing can be positioned in any convenient location on the control panel of the agricultural vehicle, thereby placing few constraints on the design of the control panel. Being directly mounted on the base, the display housing is also not prone to vibration which would make information displayed on the screen difficult to read.

While the part spherical surface has been shown and described as being the lower surface, it will be readily appreciated that the orientation of this surface will depend on where and how the display unit is mounted in a cab. Indeed, there is no reason why the display housing should not be mounted upside down in which case its "base" would be secured to the roof of the cab and the part spherical surface would be its top surface.

It will also be appreciated by the person skilled in the art that various modifications may be made to the illustrated embodiment without departing from the scope of the invention as set forth in the claims. For example, the slot in the base could be replaced by a hole for the bolt 56, and two slots may instead be provided on the opposite sides of the housing 50 to permit the bolt 56 to move relative to the housing 50 rather than relative to the base. Furthermore, the quick release mechanism could be replaced by a clamp nut.

## Claims

1. A display screen having a housing (50) and a base (52), the housing (50) having a part spherical support surface (51) mating with a socket of complementary shape in the base (52) to allow the screen orientation to be adjusted, and locking means (58, 62) for locking the housing (50) relative to the base in any selected orientation of the screen position, and
**characterized in that** the locking means (58, 62) comprise an elongate member (56) passing through the housing (50) and extending from the base (52) to the opposite side of the housing (50) and a manually operable clamping member (58, 62) engaging the elongate member (56) on said opposite side of the housing (50).

2. A display screen as claimed in claim 1, wherein the elongate member (56) passes through the centre of curvature of the part spherical support surface (52).

3. A display screen as claimed in claim 1 or 2, wherein the clamping member (58, 62) comprises a lever (62) connected to an eccentric (58) rotatably mounted on the end of the elongate member (56).

4. A display screen as claimed in any preceding claim, wherein the end of the locking member passing through the base (52) passes through an elongate slot (66) in the base.

5. A display screen as claimed in claim 4, wherein the elongate member is a bolt (56) having a head or a nut (64) engaged in a channel (66) on the top side of the base, which channel serves to prevent the nut or the bolt (64) from turning.

## Patentansprüche

1. Anzeigebildschirm mit einem Gehäuse (50) und einer Auflage (52), wobei das Gehäuse (50) eine teilkugelförmige Auflagefläche (51) aufweist, die mit einem Sockel komplementärer Form in der Auflage (52) zusammenpasst, um eine Einstellung der Ausrichtung des Bildschirms zu ermöglichen, und mit Verriegelungseinrichtungen (58, 62) zur Verriegelung des Gehäuses (50) gegenüber der Auflage in irgendeiner ausgewählten Ausrichtung der Bildschirm-Position, und
**dadurch gekennzeichnet, dass** die Verriegefungseinrichtung (58, 62) ein langgestrecktes Bauteil (56), das durch das Gehäuse (50) hindurchläuft und sich von der Auflage (52) aus zur gegenüberliegenden Seite des Gehäuses (50) erstreckt, und ein manuell betätigbares Klemmelement (58, 62) aufweist, das mit dem langgestreckten Bauteil (56) auf der gegenüberliegenden Seite des Gehäuses (50) in Eingriff kommt.

2. Anzeigebildschirm nach Anspruch 1, bei dem das langgestreckte Bauteil (56) durch den Krümmungsmittelpunkt der teilkugelförmigen Auflagefläche (52) hindurchläuft.

3. Anzeigebildschirm nach Anspruch 1 oder 2, bei dem das Klemmelement (58, 62) einen Hebel (62) umfasst, der mit einem Exzenter (58) verbunden ist, der drehbar an dem Ende des langgestreckten Bauteils (56) befestigt ist.

4. Anzeigebildschirm nach einem der vorhergehenden Ansprüche, bei dem das Ende des durch die Auflage (52) hindurchlaufenden Verriegelungselementes durch einen langgestreckten Schlitz (66) in der Auflage hindurchläuft.

5. Anzeigebildschirm nach Anspruch 4, bei dem das langgestreckte Bauteil eine Schraube (56) mit einem Kopf oder einer Mutter (64) ist, die in einem Kanal (66) auf der Oberseite der Auflage in Eingriff steht, wobei dieser Kanal dazu dient, zu verhindern, dass sich die Mutter oder die Schraube (64) drehen.

## Revendications

1. Ecran d'affichage comportant un boîtier (50) et un socle (52), le boîtier (50) ayant une surface de support en partie sphérique (51) s'ajustant à un support de forme complémentaire dans le socle (52) pour permettre d'ajuster l'orientation de l'écran, et des moyens de serrage (58, 62) pour bloquer le boîtier (50) sur le socle dans l'orientation sélectionnée de la position de l'écran, et
**caractérisé en ce que** les moyens de serrage (58, 62) comprennent un élément allongé (56) traversant le boîtier (50) et s'étendant du socle (52) au côté opposé du boîtier (50) et un élément de blocage actionnable manuellement (58, 62) enclenchant l'élément allongé (56) sur ledit côté opposé du boîtier (50).

2. Ecran d'affichage selon la revendication 1, dans lequel l'élément allongé (56) passe à travers le centre de la courbure de la surface de support en partie sphérique (52).

3. Ecran d'affichage selon la revendication 1 ou 2, dans lequel l'élément de blocage (58, 62) comprend un levier (62) connecté à un excentrique (58) monté de manière tournante à l'extrémité de l'élément allongé (56).

4. Ecran d'affichage selon l'une quelconque des revendications précédentes, dans lequel l'extrémité de l'élément de blocage traversant le socle (52) passe au travers d'une fente allongée (66) dans le socle.

5. Ecran d'affichage selon la revendication 4, dans lequel l'élément allongé est un boulon (56) ayant une tête ou un écrou (64) engagé dans une rainure (66) sur le côté supérieur du socle, laquelle rainure sert à empêcher l'écrou ou le boulon (64) de tourner.
